# EUROPÄISCHE PATENTANMELDUNG

(11) **EP 2 037 564 A2**
(43) Veröffentlichungstag der Anmeldung: **18.03.2009**
(21) Anmeldenummer: 08015435.4
(22) Anmeldetag: 02.09.2008
(51) Int. Cl.: H02P 3/18

(54) **Verfahren und Anordnung zum elektrischen Bremsen eines Asynchronmotors**

(30) Priorität: 11.09.2007 DE 102007043205
(71) Anmelder: Klinger & Born GmbH, 64395 Brensbach (DE)
(72) Erfinder: Heinen, Peter, 64732 Bad König (DE)
(74) Vertreter: Katscher Habermann Patentanwälte

(57) **Zusammenfassung**

Bei einem Verfahren und einer Anordnung zum elektrischen Bremsen eines Asynchronmotors, wobei mindestens einer Wicklung des Asynchronmotors ein einstellbarer Gleichstrom zugeführt wird, ist vorgesehen, dass der Gleichstrom derart eingestellt wird, dass der mindestens einen Wicklung innerhalb einer vorgegebenen Bremszeit eine Energie zugeführt wird, welche mit einer bei einem vorangegangenen Hochlauf des Asynchronmotors gemessenen Energie in einem vorgegebenen Verhältnis steht. Die erfindungsgemäße Anordnung passt sich somit vollautomatisch an die jeweilige Maschine an. Der Anwender braucht keine Messungen oder Einstellungen vorzunehmen.

## Beschreibung

Die Erfindung betrifft ein Verfahren und eine Anordnung zum elektrischen Bremsen eines Asynchronmotors, wobei mindestens einer Wicklung des Motors ein Gleichstrom mit einstellbarer Stromstärke zugeführt wird.

Aus sicherheitstechnischen Gründen ist eine Bremsung dort erforderlich, wo eine motorisch angetriebene Einrichtung kein permanentes Gegenmoment erhält und nach dem Abschaltvorgang an sich ungebremst ausläuft. Hierdurch können Menschen gefährdet werden, wie dies zum Beispiel bei Sägen, Hobel, Zentrifugen usw. der Fall ist.

Mechanische Bremsvorrichtungen sind einerseits kostenintensiv und unterliegen andererseits einem Verschleiß, so dass zur Gewährleistung ihrer einwandfreien Funktion eine regelmäßige Wartung erforderlich ist.

Es sind daher verschiedene elektrische Bremseinrichtungen bekannt geworden, die auch Elektronikbremsen genannt werden. Eine solche bekannte Bremseinrichtung wird beispielsweise in DE 103 53 741 A1 beschrieben, wobei die Bremsschaltung für einen Elektromotor dadurch verkleinert werden soll, dass anstelle einer bekannten Schaltung mit Brems-Thyristoren und Freilaufdioden eine Bremsschaltung mit zwei Halbleiterschaltelementen vorgeschlagen wird, die mit der Wicklung des Motors verbunden sind und über die ein Bremsstrom schaltbar ist. Bei dieser bekannten Bremseinrichtung wird bei der Erstinbetriebnahme ein Lernvorgang durchgeführt, um einen Bremsstrom zu ermitteln, der eine vorgegebene Bremsdauer bewirkt.

Ferner sind aus DE 35 33 802 A1 eine Schaltungsanordnung und ein Verfahren zur Steuerung eines sanften Anlaufens und einer schnellen definierten Abbremsung bekannt. Diese Schaltungsanordnung ist im Wesentlichen für Positionierantriebe ausgebildet, wobei Drehzahlerfassungseinrichtungen und Näherungsschalter vorgesehen sind.

Durch EP 0 041 191 A2 sind ferner ein Verfahren und eine Schaltungsanordnung zur Gleichstrombremsung einer Drehstrom-Asynchronmaschine bekannt geworden, bei welcher ein bei Stillstand des Rotors und bei dadurch Ausbleiben des Kurzschlussstroms durch eine nicht vom Bremsstrom durchflossene Wicklung eine selbsttätige Abschaltung des Gleichstroms bewirkt wird.

Die bekannten Elektronikbremsen verfügen über Einstellmöglichkeiten, um die Bremsstromstärke sowie die Bremszeit der Einrichtung anzupassen. Diese beiden Parameter werden einmalig maschinen- bzw. werkzeugspezifisch ermittelt und justiert - werden also auf eine bestimmte Anordnung fixiert, z.B. nach den Prüfgrundsätzen für Holzbearbeitungsmaschinen GS-HO-01 Anlage1 Bremsprüfung : Maschinen, bei denen während des Auslaufs das Werkzeug berührt werden kann. Eine automatische Bremse ist erforderlich, wenn die ungebremste Auslaufzeit mehr als 10 s beträgt.

Auf den Bedarf nach Platz sparenden Maschinen bzw. Anlagen reagieren die Maschinenhersteller mit Multifunktionsmaschinen, die mehrere Antriebe und Arbeitsfunktionen vereinen. Speziell in der Holzbearbeitung ist bei den kleineren Multifunktionsmaschinen kein simultanes Arbeiten vorgesehen. Die Arbeitsstationen werden mittels Austausch der Werkzeuge den Anforderungen angepasst (kleines/großes Sägeblatt). Das heißt, die Antriebe werden mit unterschiedlichen Trägheitsmomenten beaufschlagt und die kinetischen Energien differieren stark.

Wegen der seriellen Arbeitsweise ist immer nur ein Motor aktiv und aus Kostengründen werden alle Motore von derselben Steuer- und Bremseinheit bedient. Dies hat zur Folge, dass die Elektronikbremse auf den größten Energieinhalt parametriert wird. Ein neues Einstellen nach einem erfolgten Werkzeugwechsel wird vom Markt nicht akzeptiert und ist zudem fehlerbehaftet. Der schwächste Motor mit der geringsten Schwungmasse wird also mit dem gleichen Bremsstrom beaufschlagt, wie es bei dem stärksten Motor mit der größten Schwungmasse erforderlich ist. Ein höherer Verschleiß bis hin zur Zerstörung der kleineren Motore oder deren Getriebemechanik kann die Folge sein.

Aufgabe der Erfindung ist es daher, den Läufer sowohl eines Drehstrommotors als auch eines Wechselstrommotors mit Anlaufkondensator definiert zu verzögern, um in einem vorgegebenen Zeitfenster bis zum Stillstand abzubremsen. Eine Anpassung an anzutreibende Werkzeuge, wie beispielsweise Kreissägeblätter, Bandsägen oder Hobel, soll dabei automatisch erfolgen.

Diese Aufgabe wird bei dem erfindungsgemäßen Verfahren dadurch gelöst, dass der Gleichstrom derart eingestellt wird, dass der mindestens einen Wicklung innerhalb einer vorgegebenen Bremszeit eine Energie zugeführt wird, welche mit einer bei einem vorangegangenen Hochlauf des Asynchronmotors gemessenen Energie in einem vorgegebenen Verhältnis steht.

Die Energie, um ein Massesystem auf eine definierte Geschwindigkeit zu beschleunigen, entspricht der Energie, um dieses Massesystem wieder bis zum Stillstand abzubremsen, bei Vernachlässigung von Reibungsverlusten. Analog hierzu gilt für einen Elektromotor, dass die Anlaufenergie der aufzubringenden Bremsenergie gleichzusetzen ist.

Bei der Erfindung wird davon ausgegangen, dass das Verhältnis der Wirkungsgrade des Motors in der Hochlaufphase und in der Bremsphase in Stern- oder Dreieckverschaltung in einem bestimmten Verhältnis steht. Dieses Verhältnis wird vom Hersteller der elektronischen Bremse für Motor-Leistungsklassen ermittelt. Die Bremse funktioniert vollautomatisch und seitens Bediener werden keine Einstellungsmaßnahmen erforderlich.

Vorzugsweise ist bei der Erfindung vorgesehen, dass der Gleichstrom ein pulsierender Gleichstrom ist, wobei der Stromflusswinkel einstellbar ist.

Eine vorteilhafte Ausgestaltung des erfindungsgemäßen Verfahrens besteht darin, dass beim Hochlauf das Integral des Stroms über die Hochlaufzeit gebildet wird, dass ein das Integral repräsentierender Wert in einem Speicher abgelegt wird und dass zum Bremsen der abgelegte Wert unter Berücksichtigung der vorgegebenen Bremszeit zur Berechnung und Einstellung des Gleichstroms verwendet wird. Eine Bildung des Integrals ist vorzugsweise dadurch vorgesehen, dass während des Hochlaufs der Strom mehrfach gemessen wird, dass ein Mittelwert der Messwerte im Speicher abgelegt wird und dass zum Bremsen der Gleichstrom nach dem abgelegten Mittelwert eingestellt wird. Diese Rechenoperationen können mit preiswerten Mikrocontrollern durchgeführt werden.

Bei einer ersten Ausgestaltung des erfindungsgemäßen Verfahrens ist vorgesehen, dass beim Hochlauf eines in Sternschaltung betriebenen Motors der Strom in einer Wicklung gemessen wird und dass zum Bremsen der Gleichstrom durch die eine und eine zweite Wicklung geleitet wird. Die Erfindung ist ebenso für in Dreieckschaltung betriebene Motore als auch für Wechselstrom-Asynchronmotore geeignet.

Um eine ausreichende, jedoch nicht zu lange Dauer des Bremsstroms sicherzustellen, kann bei der ersten Ausgestaltung vorgesehen sein, dass der Bremsvorgang abgeschlossen wird, wenn ein an einer nicht vom Gleichstrom durchflossenen Wicklung anstehendes Signal einen vorgegebenen Minimalwert mehrmals in Folge unterschreitet.

Bei einer zweiten Ausgestaltung des erfindungsgemäßen Verfahrens ist vorgesehen, dass beim Hochlauf eines in Dreieckschaltung betriebenen Motors der Strom in einer Phase gemessen wird und dass zum Bremsen der Gleichstrom durch eine Wicklung und durch eine Reihenschaltung aus den beiden weiteren Wicklungen geleitet wird. Bei dieser Ausgestaltung kann der Bremsvorgang abgeschlossen werden, wenn ein am Verbindungspunkt der weiteren Wicklungen anstehendes Signal einen vorgegebenen Minimalwert mehrmals in Folge unterschreitet.

Die Aufgabe wird bei der erfindungsgemäßen Anordnung dadurch gelöst, dass Mittel zur Messung der bei einem Hochlauf aufgenommenen Energie, zur Speicherung eines die Energie repräsentierenden Wertes und zur Einstellung des Gleichstroms in Abhängigkeit von dem gespeicherten Wert vorgesehen sind.

Vorzugsweise ist die erfindungsgemäße Anordnung derart ausgestaltet, dass Mittel zur Messung des Hochlaufstroms, zur Bildung des Mittelwertes des Hochlaufstroms und zu dessen Speicherung vorgesehen sind und dass ein während des Bremsvorgangs aktives Stromsteuerelement auf den gespeicherten Mittelwert einstellbar ist.

Andere Weiterbildungen und Verbesserungen der erfindungsgemäßen Anordnung sind in weiteren Unteransprüchen aufgeführt.

Die Erfindung lässt zahlreiche Ausführungsformen zu. Mehrere davon sind schematisch in der Zeichnung anhand mehrerer Figuren dargestellt und nachfolgend beschrieben. Es zeigt:
Fig. 1 ein Schaltbild eines ersten Ausführungsbeispiels,
Fig. 2 den Verlauf des Stroms beim Hochfahren,
Fig. 3 den Verlauf des Bremsstroms,
Fig. 4 ein Schaltbild eines zweiten Ausführungsbeispiels und
Fig. 5 ein Schaltbild eines dritten Ausführungsbeispiels.

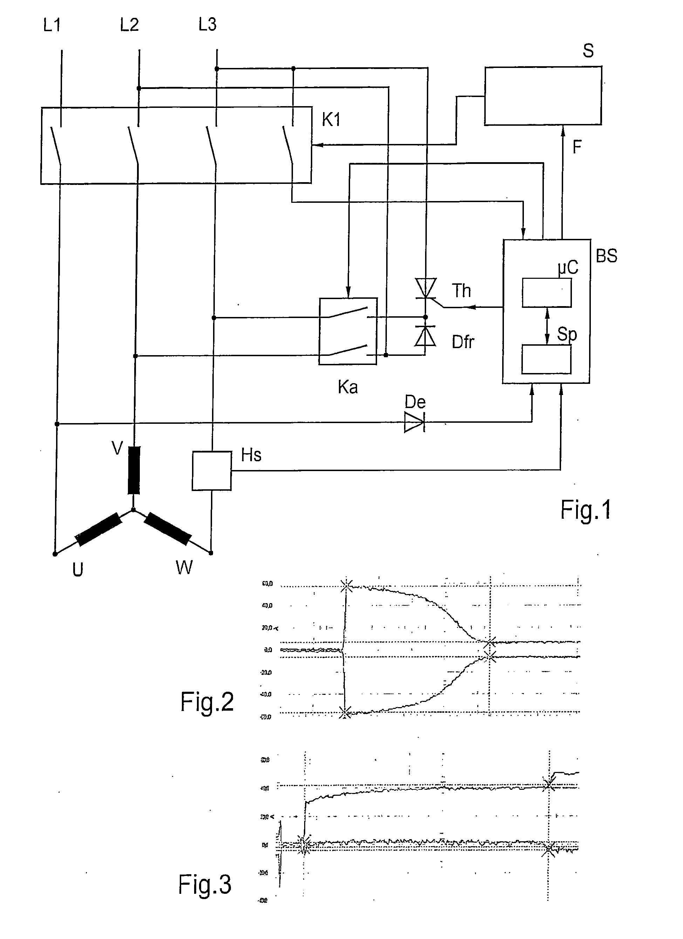

Fig. 1 stellt in Form eines Blockschaltbildes die zur Erläuterung der Erfindung erforderlichen Teile einer erfindungsgemäßen Anordnung dar mit einem Drehstrommotor, dessen Wicklungen U, V, W über ein Schütz K1 mit den Phasen L1, L2, L3 des Drehstromnetzes verbindbar sind. Das Schütz wird von einem Steuergerät S gesteuert, das unter anderem ein Bedienfeld mit entsprechenden Bedienelementen zum Einund Ausschalten des Drehstrommotors enthält. Das Schütz K1 enthält neben den für die drei Phasen vorgesehenen Kontakten einen vierten Kontakt, der zur Verriegelung mit der Bremsanordnung in dem Sinne dient, dass eine Bremsung nur durchgeführt werden kann, wenn der Motor vom Netz getrennt ist. Dazu ist ein Eingang des Bremssteuergerätes BS über den vierten Kontakt des Schützes K1 mit der Phase L3 verbunden. Umgekehrt erhält das Steuergerät S von dem Bremssteuergerät BS ein Freigabesignal F, welches je nach Ausführung im Einzelnen verhindert, dass unmittelbar nach dem Ausschalten oder während des Bremsvorganges der Motor wieder mit dem Netz verbunden wird.

Ist ein Wiedereinschalten während des Bremsvorgangs erforderlich, so erhält das Steuergerät nur dann vom BS das F-Signal, wenn alle sicherheitsrelevanten Aspekte von der BS überprüft wurden und unzulässige Zustände in der Anlage nicht vorkommen können.

Neben anderen Komponenten weist das Bremssteuergerät BS einen Mikrocontroller µC mit seinem Speicher Sp auf, in den beim Hochlauf ermittelte Werte eingeschrieben und zur Einstellung des Bremsstroms ausgelesen werden.

Ein beispielsweise als Hallsensor Hs ausgebildeter Stromsensor misst den Strom, der während des Hochlaufs von der Wicklung W aufgenommen wird. Die Verwendung anderer Sensoren ist möglich, beispielweise solcher mit einem Shunt-Widerstand. Das Ausgangssignal des Hallsensors Hs wird - wie später genauer erläutert - im Bremssteuergerät ausgewertet. Zur Zuführung eines pulsierenden Bremsgleichstroms zur Reihenschaltung aus den Wicklungen V und W ist ein weiteres Schütz Ka vorgesehen, das zu Beginn des Bremsbetriebes vom Bremssteuergerät Bs eingeschaltet wird. Durch eine im Sinne einer Phasenanschnittsteuerung vom Bremssteuergerät vorgenommene Steuerung des Thyristors Th kann die Größe des Bremsstroms eingestellt werden. Dem Thyristor Th ist in an sich bekannter Weise eine Freilaufdiode Dfr zugeordnet.

In der Wicklung U wird während des Bremsbetriebes eine Spannung induziert, die während der nicht leitenden Phasen des Thyristors Th in dem Bremssteuergerät ausgewertet wird. Dazu wird diese Spannung über eine Entkoppel-Diode De dem Bremssteuergerät BS zugeführt. Diese Spannung dient zur Stillstandserkennung. Dazu wird sie im Bremssteuergerät mit einem Referenzwert verglichen, wobei ein Stillstand des Motors angenommen wird, wenn die Spannung kleiner als der Referenzwert ist. Diese Prüfung wird während mehrerer aufeinanderfolgender Perioden der Netzspannung durchgeführt.

Nach dem Einschalten wird in einem definierten Zeitfenster von wenigen Sekunden, beispielsweise 3,5s, das Integral über den Anlaufstrom gebildet. Die Hüllkurve des Anlaufstroms I ist in Fig. 2 dargestellt.

Der Zündzeitpunkt des Thyristors wird daraufhin beim Bremsvorgang derart eingestellt, dass ein Bremsstrom fließt, dessen Größe integriert über die vorgesehene Bremszeit der beim Hochlauf aufgenommenen Energie entspricht

Fig. 3 zeigt die Hüllkurve des Bremsstroms, wobei zu Beginn des Bremsstroms die Auswirkung der Gegen-EMK und zum Ende des Bremsvorganges das Kurzschlussverhalten erkennbar ist.

Entscheidend ist dabei, dass die Kurve Scheitelwerte des phasenangeschnittenen Thyristorstroms darstellt.

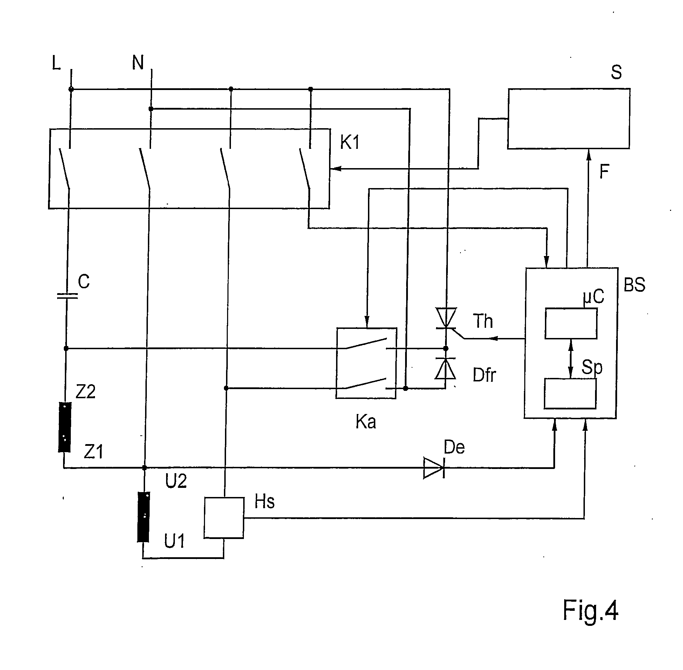

Fig. 4 zeigt ein Blockschaltbild einer erfindungsgemäßen Anordnung mit einem Wechselstrommotor mit zwei Wicklungen Z1/Z2 und U1/U2 und einem Phasenkondensator C. Der Bremsstrom wird der Reihenschaltung aus beiden Wicklungen zugeführt. Der Verbindungspunkt beider Wicklungen ist über die Diode De an einen Eingang des Bremssteuergerätes BS angeschlossen. Die diesem Eingang zugeführte Spannung dient wie beim Ausführungsbeispiel nach Fig. 1 der Stillstandserkennung. Auch die weiteren Teile der Anordnung nach Fig. 4 entsprechen denjenigen nach Fig. 1.

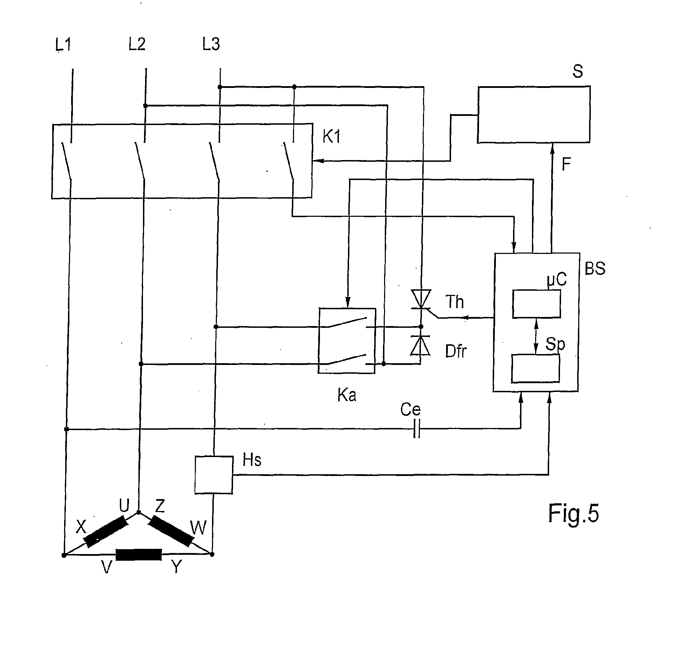

Das in Fig. 5 dargestellte Ausführungsbeispiel betrifft einen Drehstrommotor in Dreieckschaltung mit den Wicklungen U, X; V, Y; Z, W. Die in Fig. 5 dargestellte Schaltung enthält anstelle einer Entkoppeldiode einen Entkoppelkondensator Ce, der auch zu einem gutauswertbaren Signal Use beiträgt und auch in den Schaltungen nach den Figuren 1 und 4 verwendet werden kann. Die übrigen Teile des Ausführungsbeispiels nach Fig. 5 entsprechen denjenigen gemäß den Figuren 1 und 4.

## Patentansprüche

1. Verfahren zum elektrischen Bremsen eines Asynchronmotors, wobei mindestens einer Wicklung des Asynchronmotors ein einstellbarer Gleichstrom zugeführt wird, **dadurch gekennzeichnet, dass** der Gleichstrom derart eingestellt wird, dass der mindestens einen Wicklung innerhalb einer vorgegebenen Bremszeit eine Energie zugeführt wird, welche mit einer bei einem vorangegangenen Hochlauf des Asynchronmotors gemessenen Energie in einem vorgegebenen Verhältnis steht.

2. Verfahren nach Anspruch 1, **dadurch gekennzeichnet, dass** der Gleichstrom ein pulsierender Gleichstrom ist, wobei der Stromflusswinkel einstellbar ist.

3. Verfahren nach einem der Ansprüche 1 oder 2, **dadurch gekennzeichnet, dass** beim Hochlauf das Integral des Stroms über die Hochlaufzeit gebildet wird, dass ein das Integral repräsentierender Wert in einem Speicher abgelegt wird und dass zum Bremsen der abgelegte Wert unter Berücksichtigung der vorgegebenen Bremszeit zur Berechnung und Einstellung des Gleichstroms verwendet wird.

4. Verfahren nach einem der Ansprüche 1 oder 2, **dadurch gekennzeichnet, dass** während des Hochlaufs der Strom mehrfach gemessen wird, dass ein Mittelwert der Messwerte im Speicher abgelegt wird und dass zum Bremsen der Gleichstrom nach dem abgelegten Mittelwert eingestellt wird.

5. Verfahren nach einem der vorhergehenden Ansprüche, **dadurch gekennzeichnet, dass** beim Hochlauf eines in Sternschaltung betriebenen Motors der Strom in einer Wicklung gemessen wird und dass zum Bremsen der Gleichstrom durch die eine und eine zweite Wicklung geleitet wird.

6. Verfahren nach Anspruch 5, **dadurch gekennzeichnet, dass** der Bremsvorgang abgeschlossen wird, wenn ein an einer nicht vom Gleichstrom durchflossenen Wicklung anstehendes Signal einen vorgegebenen Minimalwert mehrmals in Folge unterschreitet.

7. Verfahren nach einem der Ansprüche 1 bis 4, **dadurch gekennzeichnet, dass** beim Hochlauf eines in Dreieckschaltung betriebenen Motors der Strom in einer Phase gemessen wird und dass zum Bremsen der Gleichstrom durch eine Wicklung und durch eine Reihenschaltung aus den beiden weiteren Wicklungen geleitet wird.

8. Verfahren nach Anspruch 7, **dadurch gekennzeichnet, dass** der Bremsvorgang abgeschlossen wird, wenn ein am Verbindungspunkt der weiteren Wicklungen anstehendes Signal einen vorgegebenen Minimalwert mehrmals in Folge unterschreitet.

9. Anordnung zum elektrischen Bremsen eines Asynchronmotors, wobei mindestens einer Wicklung des Asynchronmotors ein einstellbarer Gleichstrom zugeführt wird, **dadurch gekennzeichnet, dass** Mittel (µC, Sp, Th) zur Messung der bei einem Hochlauf aufgenommenen Energie, zur Speicherung eines die Energie repräsentierenden Wertes und zur Einstellung des Gleichstroms in Abhängigkeit von dem gespeicherten Wert vorgesehen sind.

10. Anordnung nach Anspruch 9, **dadurch gekennzeichnet, dass** Mittel (Hs, µC, Sp) zur Messung des Hochlaufstroms, zur Bildung des Mittelwertes des Hochlaufstroms und zu dessen Speicherung vorgesehen sind und dass ein während des Bremsvorgangs aktives Stromsteuerelement (Th) auf den gespeicherten Mittelwert einstellbar ist.

11. Anordnung nach einem der Ansprüche 9 oder 10, **dadurch gekennzeichnet, dass** die Wicklungen (U, V, W) jeweils über einen Kontakt eines ersten Relais (K1) mit der Stromquelle verbindbar sind, dass ein zweites Relais (Ka) , das wechselweise mit dem ersten Relais (K1) steuerbar ist, mindestens eine Wicklung (V, W) über die Stromsteuereinrichtung (Th) mit der Spannungsquelle verbindet und dass eine Steuereinrichtung (BS, S) zur Messung des Hochlaufstroms mit Hilfe eines Stromsensors (Hs), zur Steuerung der Relais (K1, Ka) und zur Steuerung der Stromsteuereinrichtung (Th) ausgebildet ist.

12. Anordnung nach einem der Ansprüche 9 oder 10, **dadurch gekennzeichnet, dass** die Wicklungen jeweils über einen Kontakt eines Relais mit der Stromquelle verbindbar sind, dass im Wechsel mit den Kontakten wirkende weitere Kontakte mindestens eine Wicklung über die Stromsteuereinrichtung mit der Spannungsquelle verbinden und dass eine Steuereinrichtung zur Messung des Hochlaufstroms mit Hilfe eines Stromsensors, zur Steuerung der Relais und zur Steuerung der Stromsteuereinrichtung ausgebildet ist.
